# NEUE EUROPÄISCHE PATENTSCHRIFT

(11) **EP 1 613 441 B2**
(45) Veröffentlichungstag und Bekanntmachung des Hinweises auf die Entscheidung über den Einspruch: **22.06.2011**
(45) Hinweis auf die Patenterteilung: 12.09.2007
(21) Anmeldenummer: 04723970.2
(22) Anmeldetag: 29.03.2004
(51) Int. Cl.: B22D 11/128

(54) **VORRICHTUNG ZUM ANKUPPELN EINER KÜHLMITTELZUFÜHRUNG AN EINE WALZE**
DEVICE FOR COUPLING A COOLANT SUPPLY TO A ROLLER
DISPOSITIF POUR ACCOUPLER UNE ALIMENTATION EN REFRIGERANT A UN CYLINDRE

(30) Priorität: 10.04.2003 DE 10316673
(43) Veröffentlichungstag der Anmeldung: 11.01.2006
(73) Patentinhaber: Fa. Georg Springmann Industrie- und Bergbautechnik GMBH, 45472 Mülheim an der Ruhr (DE); SMS Siemag AG, 40237 Düsseldorf (DE)
(72) Erfinder: SPRINGMANN, Georg, 45472 Mülheim/Ruhr (DE); WARMBIER, Dieter, 47441 Moers (DE); HASSELBRINK, Dirk, 47059 Duisburg (DE); STOY, Wilbert, 40885 Ratingen (DE); STEUTEN, Michael, 47447 Moers (DE); ZENZ, Ulrich, 47228 Duisburg (DE); STEINFORT, Eberhard, 47239 Duisburg (DE)
(74) Vertreter: Nobbe, Matthias
(86) Internationale Anmeldenummer: PCT/DE2004/000680
(87) Internationale Veröffentlichungsnummer: WO 2004/091830

(56) Entgegenhaltungen:
- EP-A1- 0 519 904
- EP-A1- 1 048 880
- WO-A1-03/004919
- WO-A2-97/15763
- AT-B- 396 006
- AT-U1- 687
- DE-C- 4 207 042
- DE-C1- 19 752 336

## Beschreibung

Die Erfindung betrifft eine Vorrichtung zum Ankuppeln einer Kühlmittelzuführung an eine Walze, insbesondere für Stranggießanlagen.

Bei Stranggießanlagen läuft rotglühender Stahl in Strangform über Walzen, die außen über Zapfen in einem Lagerbock mittels Wälzlagern gelagert sind. Die Walzen werden in einem geschlossenem Kreislauf durch Zuführung eines Kühlmittels (insbesondere Wasser) unter Druck in das Innere der Walze zur Abführung der Wärme gekühlt, was beispielsweise über die Wasserführung über eine durch die Zapfen geführte axiale Walzenbohrung realisierbar ist.

Aus DE 42 07 042 C1 ist eine Vorrichtung zum Ankuppeln der Kühlmedienzuführung an eine Stütz- und/oder Transportwalze insbesondere für Stranggießanlagen bekannt, bei welcher jeder Lagerbock durch einen Deckel verschlossen ist. Der Deckel weist einen Kühlkanal auf, der mit einem weiteren Kühlkanal im Lagerbock zum Anschluss an eine Kühlmittelzufuhr bzw. - abfuhr in Verbindung steht und an seinem anderen Ende im Bereich der Zapfenbohrung mündet. Die auf diese Weise ausgebildete verkapselte Einheit bewirkt einen relativ guten Schutz der Bauelemente gegen Verschleiß, da die Bauelemente gegen die z.T. aggressive Umgebung der Stranggießanlage (z.B. Spritzwasser) sowie gegenüber äußeren mechanischen Einwirkungen geschützt sind.

Diese Vorrichtung besitzt jedoch zum einen den Nachteil, dass die zur Ausbildung des Kühlmittelkanals exakt aufeinander abgestimmten Elemente aus Lagerbock und Lagerbockdeckel eine Umrüstung bestehender Stranggießanlagen erschweren. Vor allem aber ist die Durchführung von Wartungsarbeiten an dieser Vorrichtung dadurch erschwert, dass der gesamte Lagerbockdeckel demontiert werden muss, um einen Zugang zu den von diesem abgedeckten Bauelementen (dem elastischem Kompensator, den daran vorgesehenen Dichteinheiten, Wälzlagern etc.) zu ermöglichen.

Der vorliegenden Erfindung liegt daher die Aufgabe zugrunde, eine Vorrichtung zum Ankuppeln einer Kühlmittelzuführung an eine Walze zu schaffen, bei welcher die Flexibilität sowohl hinsichtlich deren Installation als auch hinsichtlich der Durchführung von Wartungsarbeiten und des Austauschs einzelner Komponenten erhöht wird.

Diese Aufgabe wird mit einer Vorrichtung zum Ankuppeln einer Kühlmittelzuführung an eine Walze mit den Merkmalen des Patentanspruchs 1 gelöst.

Dadurch, dass bei der erfindungsgemäßen Vorrichtung in den Lagerbockdeckel ein Einsatzstück zum Ankuppeln der Walzenbohrung an den Kühlmittelkanal einsetzbar ist, wobei die Dichteinheit als Mittel zum Abdichten des Einsatzstückes gegen die Walzenbohrung vorgesehen ist, wird gewährleistet, dass - bei aus dem Lagerbockdeckel demontiertem Einsatzstück - ein Zugriff von außen, insbesondere auf die Dichteinheit, beispielsweise zur Durchführung von Wartungsarbeiten erfolgen kann, ohne dass ein Abnehmen des gesamten Lagerbockdeckels notwendig ist. Zum anderen wird - bei im Lagerbockdeckel montiertem Einsatzstück - durch Ausbildung eines nach außen hin optimal geschützten Kühlmittelkanals weiterhin ein wirksamer Schutz gegen Verschleiß gewährleistet.

Zudem ist die Nachrüstung der erfindungsgemäßen Vorrichtung in einer bereits bestehenden Stranggießanlage problemloser durchführbar, da sämtliche die Erfindung kennzeichnenden Mittel auf Seiten des Lagerbockdeckels vorgesehen sind und die Funktionsweise der erfindungsgemäßen Vorrichtung somit unabhängig von dem Aufbau des Lagerbocks ist. Infolge der auf Seiten des Einsatzstückes vorgesehenen Dichteinheit als Mittel zum Abdichten des Einsatzstückes gegen die Walzenbohrung ist die Vorrichtung ferner auch unabhängig von der konkreten Ausgestaltung der zum druckdichten Festlegen der inneren Drehdurchführungskomponenten notwendigen Dichtelemente bzw. Anordnung der Dichtflächen.

Gemäß der Erfindung weist die Dichteinheit eine elastische Hülse, vorzugsweise in Form eines Kompensators, in einem in dem Walzenzapfen angeordneten Flansch auf, der vorzugsweise lösbar in der Walzenbohrung festgelegt ist.

Gemäß einer bevorzugten Ausführungsform ist das Einsatzstück derart ausgebildet, dass es im demontierten Zustand Befestigungsmittel zum lösbaren Befestigen der Hülse und/oder des Flansches an dem Walzenzapfen freilegt. So ist für die Demontage der elastischen Hülse sowie des Flansches nur das Abnehmen des Einsatzstückes erforderlich.

Das Einsatzstück weist vorzugsweise wenigstens einen Kühlmittelkanal auf, welcher im montierten Zustand an jeweils einen Kühlmittelkanal im Lagerbockdeckel ankuppelt.

Gemäß einer bevorzugten Ausführungsform weist das Einsatzstück einen ersten Kühlmittelkanal und einen zweiten Kühlmittelkanal auf, welche im montierten Zustand an einem ersten bzw. zweiten Kühlmittelkanal im Lagerbockdeckel ankuppeln. Der erste Kühlmittelkanal des Lagerbockdeckels ist vorzugsweise an eine Kühlmittelzufuhr und der zweite Kühlmittelkanal an eine Kühlmittelabfuhr anschließbar.
Bei dieser sogenannten Duo-Dreheinführung wird das Kühlmittel über den zweiten Kühlmittelkanal in dem Lagerbockdeckel zurück, beispielsweise zu einer Lagerbockaufstandsfläche geleitet, um von dort abgeführt zu werden.

Gemäß einer bevorzugten Ausführungsform ist in den wenigstens einen Kühlmittelkanal des Lagerbockdeckels ein Verbindungsrohr zum Anschluss an eine an die Kühlmittelabfuhr und/oder Kühlmittelzufuhr gekuppelte Lagerbockaufstandsfläche einsetzbar, so dass der Anschluss an die bodenseitig geführten Kühlwasserzu- und ableitungen gewährleistet ist.

Eine besonders bevorzugte Ausführungsform der erfindungsgemäßen Vorrichtung ist derart ausgebildet, dass der Lagerbockdeckel einen Befestigungskragen aufweist, mittels dessen der Lagerbockdeckel am Lagerbock über Befestigungsschrauben festgelegt werden kann und dass der gegenüber dem Befestigungskragen erhabene Bereich des Lagerbockdeckels, in den das Einsatzstück einsetzbar ist, etwa den Durchmesser in der Größe des Abstandes der Wälzlager im Lagerbock besitzt. In den erhabenen Bereich des Lagerbockdeckels ist der mindestens eine vom Einsatzstück weg bzw. zum Einsatzstück hin führende Kühlwasserkanal radial nach außen zum Rand des Lagerbockdeckels durchgebohrt, wobei diese Bohrung im Betrieb der Stranggiessanlage jeweils vorzugsweise durch einen Schraubstopfen verschlossen ist. Dieser Schraubstopfen kann zu Wartungsarbeiten bei Stillstand der Anlage ausgeschraubt werden, wodurch die Zuführung von Pressluft ermöglicht wird, um das Innere der Walze durch Ausblasen vom Kühlwasser zu befreien.

Erfindungsgemäß weist die erfindungsgemäße Vorrichtung eine Dichteinheit auf, die zwei aufeinander ablaufende Gleitringe als Dichtelemente umfasst, wobei der eine Gleitring von dem Einsatzstück und der andere Gleitring von der elastischen Hülse getragen wird. Bei dieser Ausführungsform wird gewährleistet, dass die auf die Dichteinheit einwirkenden Kippmomente bei Belastung der Walze im Betrieb infolge der radialen Beweglichkeit der Gleitringe und der elastischen Hülse kompensiert werden und so die Lebensdauer der Vorrichtung erhöht wird.

Weitere Ausgestaltungen der Erfindung sind der nachfolgenden Beschreibung sowie den Unteransprüchen zu entnehmen.

Die Erfindung wird nachstehend anhand von zwei in den beigefügten Abbildungen dargestellten Ausführungsbeispielen näher erläutert.

Es zeigen:
Figur 1 eine Teilansicht einer ersten Ausführungsform der erfindungsgemäßen Vorrichtung im Längsschnitt;
Figur 2 eine Querschnittsansicht der ersten Ausführungsform der erfindungsgemäßen Vorrichtung entlang der Linie II-II aus Figur 1;
Figur 3 eine perspektivische Teilansicht des ersten Ausführungsbeispiels der erfindungsgemäßen Vorrichtung.
Figur 4 eine Teilansicht einer zweiten, bevorzugten Ausführungsform der erfindungsgemäßen Vorrichtung im Längsschnitt;
Figur 5 eine Querschnittsansicht der zweiten Ausführungsform der erfindungsgemäßen Vorrichtung entlang der Linie V-V aus Figur 4;

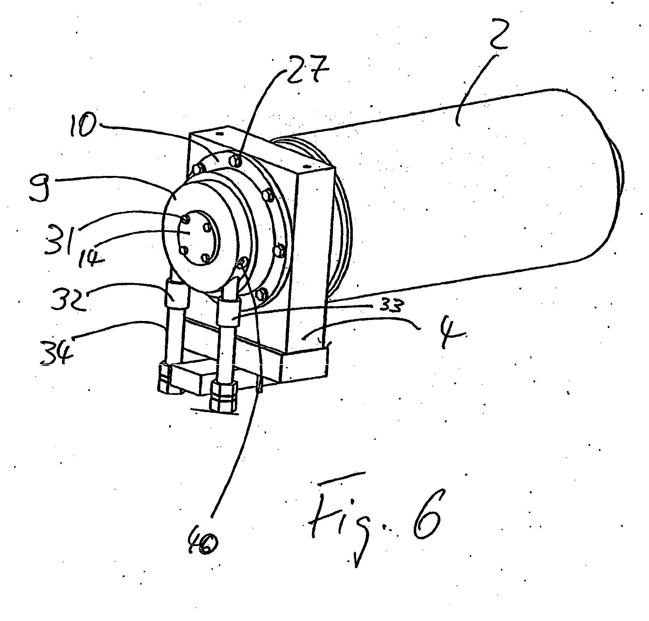

Figur 6 eine perspektivische Teilansicht des zweiten Ausführungsbeispiels der erfindungsgemäßen Vorrichtung.

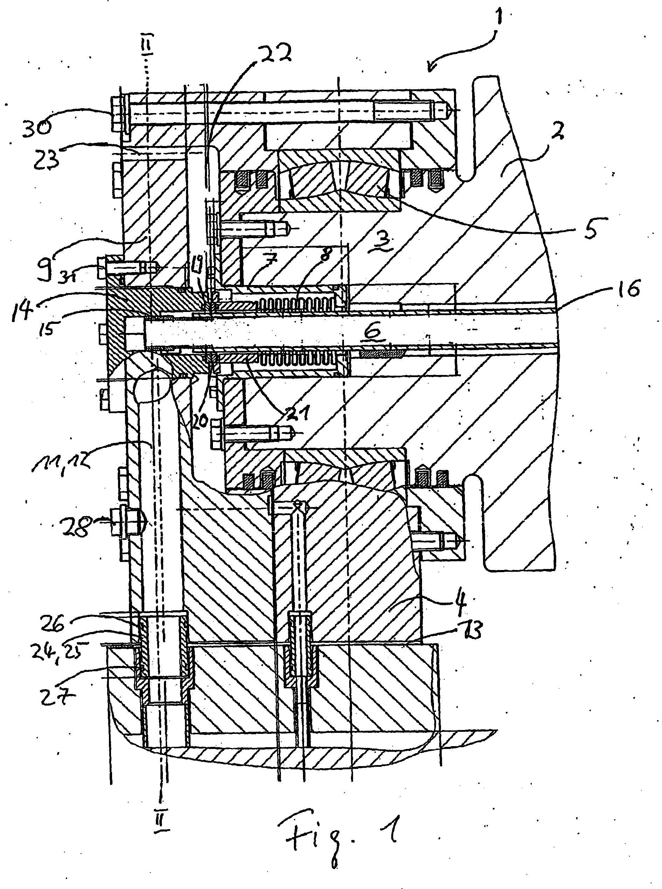

Gemäß Fig. 1 dient eine erfindungsgemäße Vorrichtung 1 zum Ankuppeln einer (nicht dargestellten) Kühlmittelzuführung an eine Walze 2 einer Stranggießanlage, wobei die Walze 2 über einen Zapfen 3 in einem Lagerbock 4 mittels Wälzlagern 5 gelagert ist. Die Walze 2 ist über eine durch den Zapfen 3 geführte axiale Walzenbohrung 6 mit einem Kühlmittel versorgbar.

In den Walzenzapfen 3 ist ein Flansch 7 eingesetzt, welcher zur Aufnahme einer vorzugsweise als Kompensator ausgebildeten elastischen Hülse 8 dient. Neben der bevorzugten Ausgestaltung der Hülse in Form eines Kompensators aus Edelstahl kann die elastische Hülse auch aus anderen, eine Elastizität verleihenden Materialien, beispielsweise in Form eines gegebenenfalls mit Gewebe verstärkten Gummihohlzylinders, der in den Flansch 7 eingepasst ist, ausgebildet sein. Hierdurch wird eine besondere Flexibilität der Hülse 8 ermöglicht und der Verschleiß der erfindungsgemäßen Vorrichtung bei Belastung der Walze wird vermindert. Die elastische Hülse 8 ist in dem dargestellten Ausführungsbeispiel in dem Flansch 7 lösbar festgelegt.

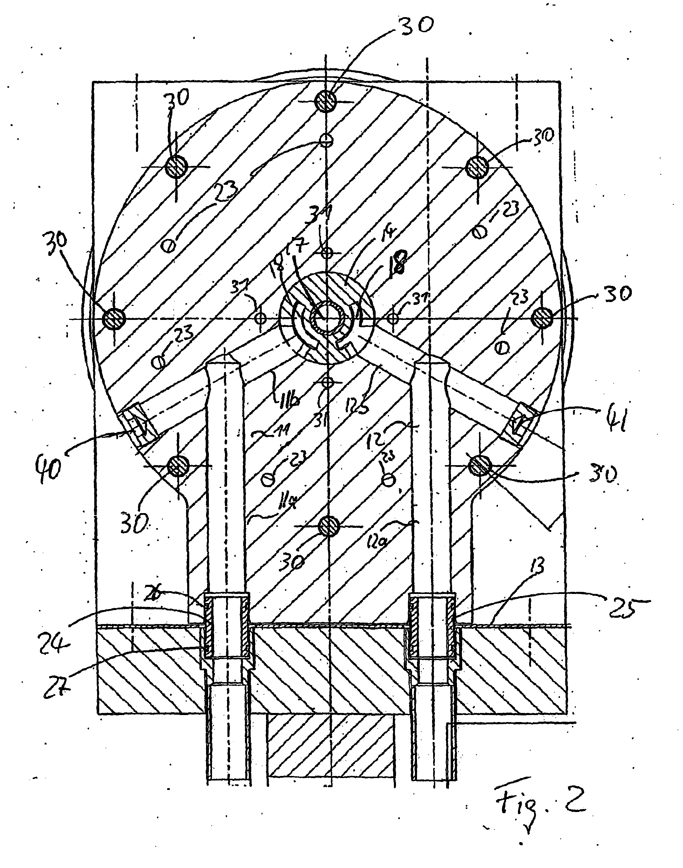

Auf dem Lagerbock 4 ist ein Lagerbockdeckel 9 festgelegt. Der Lagerbockdeckel 9 weist gemäß dem dargestellten Ausführungsbeispiel einen ersten Kühlmittelkanal 11 sowie bei einer Zuführung und Abführung des Kühlwassers auf derselben Seite der Walze einen zweiten Kühlmittelkanal 12 auf, wobei ein Ende des Kühlmittelkanals 11 an eine Kühlmittelzufuhr und ein Ende des Kühlmittelkanals 12 an eine Kühlmittelabfuhr (beide nicht dargestellt) anschließbar ist. Die Kühlmittelkanäle 11 und 12 gemäß dem dargestellten Ausführungsbeispiel weisen gemäß Fig. 2 einen zur Lagerbockaufstandsfläche 13 führenden, in Bezug auf die Walzenachse senkrecht angeordneten Kanalabschnitt 11a bzw. 12a sowie einen am anderen Ende des jeweiligen Abschnitts 11a bzw. 12a hierzu in Richtung der Walzenachse abgewinkelten Kanalabschnitt 11b bzw. 12b auf.

Der in Fig. 1 gezeigte Lagerbockdeckel 9 überdeckt die Seitenfläche des Lagerbockes 4 nahezu vollständig. Dabei ist in den Lagerbockdeckel 9 ein Einsatzstück 14 mit einem daran druckdicht festgelegten Siphonrohr 15 eingesetzt. Das zum Walzeninneren weisende Siphonrohr 15 ist so bemessen, dass es in den nach außen weisenden Endabschnitt des in das Innereder Walze reichenden Führungsrohres 16 für das Kühlwasser hineinragt und zwischen den Rohren 15 und 16 ein Ringspalt gebildet wird. Der Ringspalt ist so bemessen, dass einerseits eine relative Verdrehbarkeit der Rohre 15 und 16 gegeben ist und gleichzeitig nur ein geringer Durchfluss von Kühlwasser zugelassen wird.

Das Einsatzstück 14 weist, wie aus Figur 2 ersichtlich, einen ersten Kühlmittelkanal 17, der an das Siphonrohr 15 angekuppelt ist, und, wie in den Figuren gezeigt, bei einer Zuführung und Abführung des Kühlwassers auf derselben Seite der Walze einen zweiten Kühlmittelkanal 18 zur Abführung des Kühlwassers auf. Die Kühlmittelkanäle 17 und 18 münden jeweils an die Kanalabschnitte 11b bzw. 12b der Kühlmittelkanäle 11 und 12 im Lagerbockdeckel 9, sowie anderenends derart an die Walzenbohrung 6, dass die Walzenbohrung zur Zu-, bzw, Abführung des Kühlwassers an die Kühlmittelkanäle 11 und 12 angekuppelt wird.

Gemäß Fig. 1 ist zwischen Einsatzstück 14 und Walzenbohrung 6 eine Dichteinheit vorgesehen, die gemäß dem Ausführungsbeispiel insbesondere einen auf dem, dem Flansch 7 zugewandten Ende des Einsatzstückes 14 angeordneten Gleitring als Dichtelement 19 und, dem ersten Dichtelement 19 entsprechend, ein weiteres als Gleitring ausgebildetes Dichtelement 20 an einem an der Hülse 8 an der an dem Lagerbockdeckel 9 zugewandten Ende angeordneten Ansatzstück 21 aufweist. Gemäß dem Ausführungsbeispiel 1 sind daher die Dichtflächen der Dichtelemente 19 und 20 senkrecht zur Drehachse der Walze angeordnet.

Der in Fig. 1 gezeigte Lagerbockdeckel 9 weist in dem an den Lagerbock 4 anliegenden Bereich bevorzugt einen Hinterschneidungsbereich 22 mit vorzugsweise U-förmigem Querschnitt auf. Der Hinterschneidungsbereich 22 hat einen größeren Durchmesser als der Walzenzapfen 3 und dient dazu, infolge eventueller Undichtigkeit oder Leckage an der Dichteinheit austretendes und vertikal abfließendes Kühlmedium aufzufangen und nach außen über die Bohrungen 23 abzuführen. Die Bohrungen 23 sind entlang des Kreisumfangs des Lagerbockdeckels 9 insbesondere äquidistant angeordnet, und so wird auf diese Weise zuverlässig unabhängig von der vertikalen Ausrichtung des Lagerbockes ermöglicht, dass ausgetretenes Kühlmedium abfließen und nicht in den Bereich der Wälzlager 5 eindringen kann.

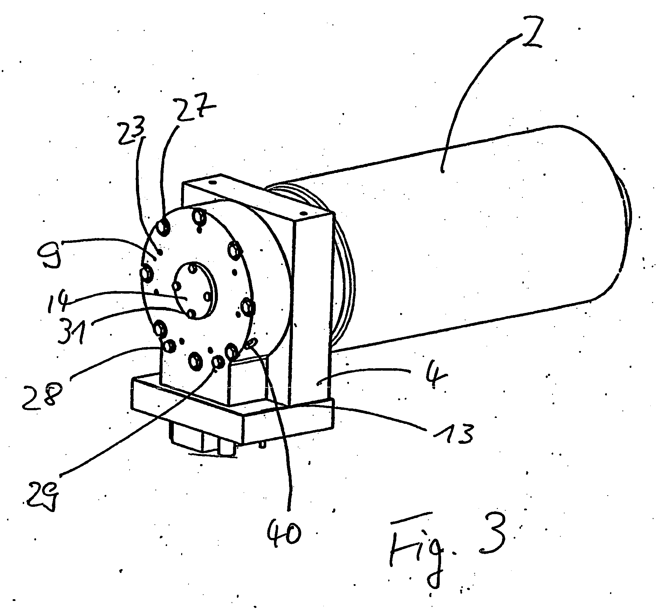

Wie aus Fig. 1 und Fig. 3 ersichtlich, sind in die Kühlmittelkanäle 11 und 12 des Lagerbockdeckels 9 jeweils auf deren dem Einsatzstück 13 abgewandten Ende Verbindungsrohre 24 bzw. 25 eingesetzt und so an die Lagerbockaufstandsfläche 13 angeschlossen, welche wiederum an die (nicht dargestellte) Kühlmittelabfuhr und/oder Kühlmittelzufuhr gekuppelt ist. Die Verbindungsrohre 24 bzw. 25 sind jeweils über an beiden stirnseitigen Endabschnitten vorgesehene O-Ringdichtungen 26 und 27 gegen Lagerbockdeckel 9 und Lagerbockaufstandsfläche 13 abgedichtet.

Der Lagerbockdeckel 9 ist bevorzugt mit zur Walzenachse koaxialen Bohrungen in die Kühlmittelkanäle 11 und 12 versehen, die durch eindrehbare Verschlussstopfen 28 und 29 verschließbar sind. Die Verschlussstopfen 28 und 29 können bei Wartungsarbeiten an der Stranggießanlage ausgeschraubt werden, und so kann man die Zuführung eines Spülmediums wie Pressluft erlauben, um das Walzeninnere durch Ausblasen von dem Kühlwasser zu befreien und so die Wartungsarbeiten zu erleichtern.

Gemäß Fig. 1 bis 3 erfolgt die Befestigung des Lagerbockdeckels 9 an dem Lagerbock 4 bevorzugt lösbar über Befestigungsschrauben 30, die entlang des Kreisumfangs des Lagerbockdeckels 9 insbesondere äquidistant angeordnet sein können. Ebenso ist das Einsatzstück 14 an dem Lagerbockdeckel über Befestigungsschrauben 31 lösbar befestigt. Infolgedessen kann ein Zugriff von außen auf die durch das Einsatzstück 14 im montierten Zustand abgedeckten Komponenten, insbesondere auf die Dichteinheit, zur Durchführung von Wartungsarbeiten problemlos durch Lösen der Befestigungsschrauben 31 und anschließendes Abnehmen des Einsatzstückes 14 erfolgen, ohne dass hierzu ein Demontieren des gesamten Lagerbockdeckels 9 von der Vorrichtung 1 notwendig ist. Hierzu ist das Einsatzstück 14 bevorzugt so bemessen, dass bei Abnahme des Einsatzstückes ein Zugriff von außen auf die durch das Einsatzstück 14 im montierten Zustand abgedeckten Komponenten, insbesondere auf die Dichteinheit, so möglich ist, dass die Dichteinheit aus der Walzenbohrung aufgrund des ungehinderten Zugriffs auf die Befestigungsschrauben des Flansches ausgebaut werden kann.

Bei im Lagerbockdeckel 9 montiertem Einsatzstück 14 sind hingegen zum einen die Kühlmittelzuführungen 11, 12, 17 und 18, zum anderen die Dichteinheit gegen die aggressive Umgebung der Stranggießanlage geschützt, und somit wird einem übermäßigen Verschleiß vorgebeugt.

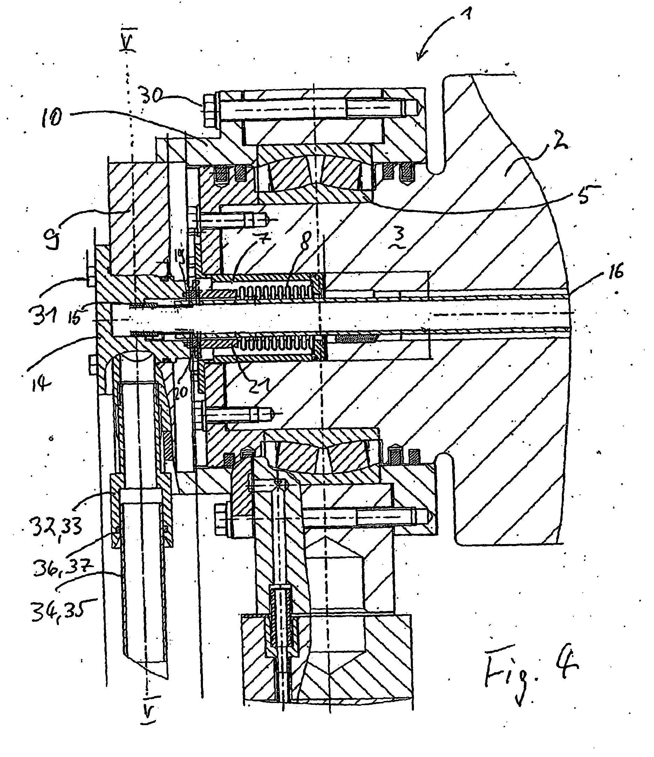

Wie gemäß Fig. 1 dient die in Figur 4 dargestellte zweite Ausführungsform der erfindungsgemäßen Vorrichtung 1 zum Ankuppeln einer (nicht dargestellten) Kühlmittelzuführung an eine Walze 2 einer Stranggießanlage, wobei die Walze 2 über einen Zapfen 3 in einem Lagerbock 4 mittels Wälzlagern 5 gelagert ist. Die Walze 2 ist über eine durch den Zapfen 3 geführte axiale Walzenbohrung 6 mit einem Kühlmittel versorgbar. Auch die in Fig. 4 gezeigte Ausführungsform kann bevorzugt - in der Zeichnung hier nicht dargestellt, aber entsprechend der Darstellung in Fig. 1 ausgeführt- in dem an den Lagerbock 4 anliegenden Bereich bevorzugt einen Hinterschneidungsbereich mit vorzugsweise U-förmigem Querschnitt aufweisen, der dazu dient, infolge eventueller Undichtigkeit oder Leckage an der Dichteinheit austretendes und in zur Walzenachse senkrechter Richtung vertikal abfließendes Kühlmedium auffangen und über nach außen führende Bohrungen abzuführen.

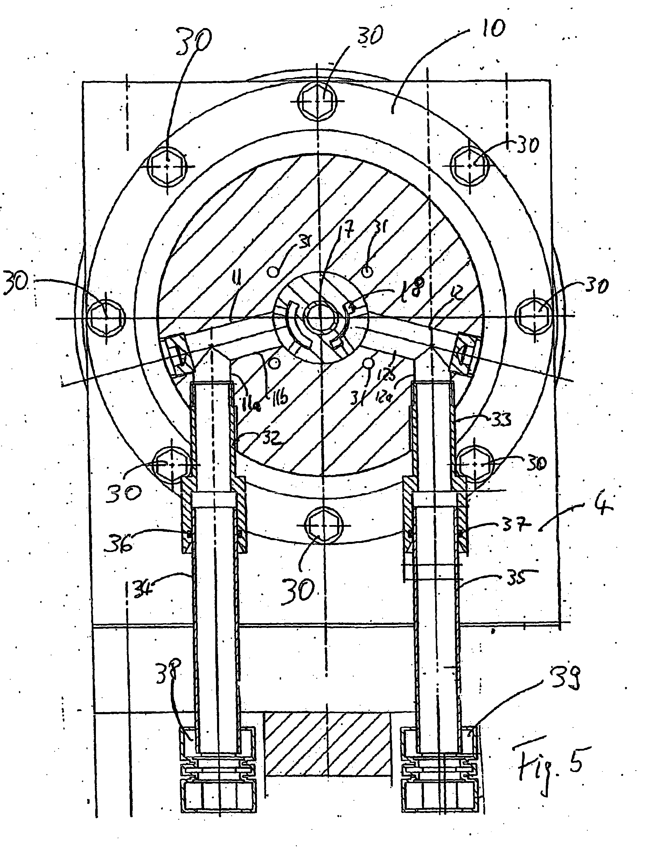

Im Unterschied zu der in Figur 1 dargestellten Ausführungsform weist der in Figur 4 im Längsquerschnitt und in Figur 5 in der im Radialquerschnitt entlang der Linie v-v aus Figur 4 gezeigte, bevorzugt kreisrunde Lagerbockdeckel 9 einen Befestigungskragen 10 auf, über den der Lagerbockdeckel 9 mit den Befestigungsschrauben 30 am Lagerbock festgelegt ist. Der in Fig. 4 gezeigte Lagerbockdeckel 9 mit Befestigungskragen 10 überdeckt die Seitenfläche des Lagerbockes 4 etwa im Bereich der Walzenquerschnittsfläche.

Der Lagerbockdeckel 9 weist dabei den ersten Kühlmittelkanal 11 sowie bei einer Zuführung und Abführung des Kühlwassers auf derselben Seite der Walze den zweiten Kühlmittelkanal 12 auf, wobei die Kühlmittelkanäle 11 und 12 gemäß dem dargestellten Ausführungsbeispiel gemäß Fig. 5 in dem zur Lagerbockaufstandsfläche führenden, in Bezug auf die Walzenachse senkrecht angeordneten Kanalabschnitt 11a bzw. 12a jeweils Steckaufnahmen 32 und 33 aufweisen, in die zur Lagerbockaufstandsfläche führende Steckrohre 34 und 35 zur Zu-, bzw Abführung des Kühlwassers eingesteckt sind. Bevorzugt sind die Steckaufnahmen 32 und 33 an ihrem zum Lagerbockdeckel weisenden Ende mit einen Außengewinde versehen, mittels dessen sie in die mit einem Innengewinde versehenen Bohrungen im Lagerbockdeckel eingeschraubt werden können.

Die Steckrohre 34 und 35 sind über die O-Ringe 36 und 37 zu den Steckaufnahmen 32 und 33 abgedichtet und erlauben die Zu- bzw. Abführung von Kühlmedium, bevorzugt Kühlwasser zur bodenseitigen Kühlwasserzu- bzw. abführung 38 und 39. In dem in Richtung der Walzenachse abgewinkelten Kanalabschnitt 11b bzw. 12b sind bevorzugt am Lagerbockdeckel radial außenseitig angeordnete Schraubstopfen 40 und 41 vorgesehen, die bei Wartungsarbeiten an der Stranggießanlage ausgeschraubt werden können und so die Zuführung eines Spülmediums wie Pressluft erlauben, um das Walzeninnere durch Ausblasen von dem Kühlwasser zu befreien und so die Wartungsarbeiten zu erleichtern.

Die erfindungsgemäße Vorrichtung, insbesondere in der in den Figuren 4 und 5 gezeigten Ausführungsform, lässt sich auch in einer bereits bestehenden Stranggießanlage problemlos einbauen, da sämtliche die Erfindung kennzeichnenden Mittel auf Seiten des Lagerbockdeckels vorgesehen sind und die Funktionsweise der erfindungsgemäßen Vorrichtung somit unabhängig von der Ausführung des Lagerbocks ist.

### Bezugszeichenliste

- 1: Vorrichtung zum Ankuppeln einer Kühlmittelzuführung
- 2: Walze
- 3: Zapfen
- 4: Lagerbock
- 5: Wälzlager
- 6: axiale Walzenbohrung
- 7: Flansch
- 8: elastische Hülse
- 9: Lagerbockdeckel
- 10: Befestigungskragen
- 11: Kühlmittelkanal
- 12: Kühlmittelkanal
- 13: Lagerbockaufstandsfläche
- 14: Einsatzstück
- 15: Siphonrohr
- 16: Führungsrohr
- 17: Kühlmittelkanal
- 18: Kühlmittelkanal
- 19: Gleitring
- 20: Gleitring
- 21: Ansatzstück
- 22: Hinterschneidungsbereich
- 23: Bohrung
- 24: Verbindungsrohr
- 25: Verbindungsrohr
- 26: O-Ring
- 27: O-Ring
- 28: Schraubstopfen
- 29: Schraubstopfen
- 30: Befestigungsschrauben
- 31: Befestigungsschrauben
- 32: Steckaufnahme
- 33: Steckaufnahme
- 34: Steckrohr
- 35: Steckrohr
- 36: O-Ring
- 37: O-Ring
- 38: Kühlwasserzuführung
- 39: Kühlwasserabführung
- 40: Schraubstopfen
- 41: Schraubstopfen

## Patentansprüche

1. Vorrichtung zum Ankuppeln einer Kühlmittelzuführung an eine Walze (2), insbesondere für Stranggießanlagen, wobei die Walze (2) über Zapfen (3) in einem Lagerbock (4) mittels Wälzlagern (5) gelagert ist und über eine durch die Zapfen (3) geführte axiale Walzenbohrung (6) mit einem Kühlmittel versorgbar ist, mit
- einer an dem Walzenzapfen (3) zum Ankuppeln an die Walzenbohrung (6) druckdicht festlegbaren Dichteinheit(7; 8; 19; 20; 21); und
- einem Lagerbockdeckel (9), der an dem Lagerbock (4) zur Abdeckung der Walzenbohrung (6) festlegbar ist und wenigstens einen an die Kühlmittelzuführung anschließbaren Kühlmittelkanal (11,12) aufweist;
wobei in den Lagerbockdeckel (9) ein die Dichteinheit (7; 8;19; 20; 21) im montierten Zustand tragendes Einsatzstück (14) einsetzbar ist,
wobei das Einsatzstück (14) zum druckdichten Ankuppeln des Kühlmittelkanals (11, 12) über die Dichteinheit (7; 8; 19; 20; 21) an die Walzeznbohrung (6) wenigstens einen Kühlmittelkanal (17, 18) aufweist, welcher im montierten zustand an den Kühlmittelkanal (11, 12) im Lagerbockdeckel (9) und die Dichteinheit (7; 8; 19; 20; 21) ankuppelt;
wobei die Dichteinheit eine elastische Hülse (8) umfasst, die in einem in dem Walzenzapfen (3) angeordneten Flansch (7) festgelegt ist; und
wobei die Dichteinheit (7; 8; 19; 20; 21) zwei aufeinander ablaufende Gleitringe (19; 20) als Dichtelemente umfasst, wobei der eine Gleitring(19) von dem Einsatzstück (14) und der andere Gleitring (20) von der elastischen Hülse (8) getragen wird.

2. Vorrichtung nach Anspruch 1, wobei die elastische Hülse ein Kompensator ist.

3. Vorrichtung nach Anspruch 1 oder 2, wobei die Hülse (8) in dem Flansch (7) lösbar festgelegt ist.

4. Vorrichtung nach einem der Ansprüche 1 bis 3, wobei das Einsatzstück (14) derart ausgebildet ist, dass es im demontierten Zustand Befestigungsmittel zum lösbaren Befestigen der Hülse (8) und/oder des Flansches (7) an dem Walzenzapfen (3) freilegt.

5. Vorrichtung nach einem der Ansprüche 1 bis 4, wobei das Einsatzstück (14) einen ersten Kühlmittelkanal (17) und einen zweiten Kühlmittelkanal (18) aufweist, welche im montierten Zustand an einem ersten bzw. zweiten Kühlmittelkanal (11, 12) im Lagerbockdeckel (9) ankuppeln.

6. Vorrichtung nach Anspruch 5, wobei der erste Kühlmittelkanal (11) des Lagerbockdeckels (9) an eine Kühlmittelzufuhr und der zweite Kühlmittelkanal (12) des Lagerbockdeckels (9) an eine Kühlmittelabfuhr anschließbar sind.

7. Vorrichtung nach einem der Ansprüche 1 bis 6, wobei in dem wenigstens einen Kühlmittelkanal (11, 12) des Lagerbockdeckels (9) ein Verbindungsrohr (24, 25) zum Anschluss an eine an die Kühlmittelabfuhr und/oder Kühlmittelzufuhr gekuppelte Lagerbockaufstandsfläche (13) derart einsetzbar ist, dass das Verbindungsrohr (24, 25) vollständig von dem Lagerbockdeckel (9) aufgenommen wird.

8. Vorrichtung nach einem der Ansprüche 1 bis 6, wobei der Lagerbockdeckel (9) mittels eines Befestigungskragens (10) am Lagerbock(4) festgelegt ist.

9. Vorrichtung nach Anspruch 8, wobei in dem wenigstens einen Kühlmittelkanal (11, 12) des Lagerbockdeckels (9) eine Steckaufnahme (32, 33) zur Aufnahme eines Steckrohres (34, 32) zum Anschluss an eine an die Kühlmittelabfuhr und/oder Kühlmittelzufuhr gekuppelte Kühlwasserzu- und/oder- abführung einsetzbar ist.

10. Vorrichtung nach einem der vorhergehenden Ansprüche, wobei in dem wenigstens einen Kühlmittelkanal (11,12) des Lagerbockdeckels (9) mindestens ein einschraubbarer Schraubstopfen (28, 29; 40, 41) angeordnet ist.

11. Vorrichtung nach einem der vorhergehenden Ansprüche, wobei mindestens eine Bohrung (23) durch den Lagerbockdeckel (9) zum Abführen von in den Bereich zwischen Lagerbockdeckel (9) und Lagerbock (4); beispielsweise durch Leckage der Dichteinheit(7; 8; 19; 20; 21), eingedrungenem Kühlmedium vorhanden ist.

12. Vorrichtung nach einem der vorhergehenden Ansprüche, wobei der Lagerbockdeckel (9) in dem an den Lagerbock (4) anliegenden Bereich bevorzugt einen Hinterschneidungsbereich (19) zur Aufnahme von in den Bereich zwischen Lagerbockdeckel (9) und Lagerbock (4) eingedrungenem Kühlmedium aufweist.

13. Vorrichtung nach Anspruch 12, wobei der Hinterschneidungsbereich (19) einen U-förmigem Querschnitt zur Aufnahme von in den Bereich zwischen Lagerbockdeckel (9) und Lagerbock (4) eingedrungenem Kühlmedium hat.

## Claims

1. A device for coupling a coolant supply to a roller (2), in particular for continuous casting installations, the roller (2) being mounted in a pillow block (4) by means of roller bearings (5) via journals (3) and being able to be supplied with a coolant via an axial roller borehole (6) guided through the journals (3), having
- a sealing unit (7; 8; 19; 20; 21), which can be fixed to the roller journal (3) to couple it to the roller borehole (6) in a pressure-tight manner; and
- a pillow block cover (9), which can be fixed to the pillow block (4) in order to cover the roller bore (6) and which has at least one coolant duct (11, 12) being connectable to the coolant supply;
whereby an insert (14), which supports the sealing unit (7; 8; 19; 20; 21) in the fitted state, is insertable into the pillow block cover (9); and
whereby said insert (14), in order to couple the coolant duct (11, 12) via the sealing unit (7; 8; 19; 20; 21) in a pressure-tight manner to the roller bore (6), is having at least one coolant duct (17, 18) which, in the fitted state, is coupled to the coolant duct (11, 12) in the pillow block cover (9) and to the sealing unit (7; 8; 19; 20; 21); whereby said sealing unit comprises an elastic sleeve (8), which is fixed in a flange (7) arranged in the roller journal (3), and
whereby the sealing unit (7; 8; 19; 20; 21) comprises two sealing rings (19; 20), which run on each other, as sealing elements, the first sealing ring (19) being supported by the insert (14) and the second sealing ring (20) being supported by the elastic sleeve (8).

2. The device as claimed in claim 1, whereby the elastic sleeve is a compensator.

3. The device as claimed in claim 1 or 2, whereby the sleeve (8) is removably fixed in the flange (7).

4. The device as claimed in any one of claims 1 to 3, whereby the insert (14) is constructed in such a manner that, when it is removed, it exposes fastening means for removably attaching the sleeve (8) and/or the flange (7) to the roller journal (3).

5. The device as claimed in any one of claims 1 to 4, whereby the insert (14) is having a first coolant duct (17) and a second coolant duct (18) which, in the fitted state, are coupled to first and second coolant ducts (11, 12) in the pillow block cover (9), respectively.

6. The device as claimed in claim 5, whereby the first coolant duct (11) of the pillow block cover (9) is connectable to a coolant supply means and the second coolant duct (12) of the pillow block cover (9) is connectable to a coolant removal means.

7. The device as claimed in any one of claims 1 to 6, whereby a connecting pipe (24, 25) for connection to a pillow-block footprint (13), which is coupled to the coolant removal means and/or coolant supply means, is insertable into the at least one coolant duct (11, 12) of the pillow block cover (9) in such a manner that the connecting pipe (24, 25) is completely contained by the pillow block cover (9).

8. The device as claimed in any one of claims 1 to 6, whereby the pillow block cover (9) is attached to the pillow block (4) by means of a fastening collar (10).

9. The device as claimed in claim 8, whereby a plug-in receptacle (32, 33) for receiving a plug-in pipe (34, 35) for connection to a cooling water supply and/or removal, which is coupled to the coolant removal means and/or coolant supply means, is insertable into the at least one coolant duct (11, 12) of the pillow block cover (9).

10. The device as claimed in any one of the preceding claims, whereby at least one screw stopper (28, 29; 40, 41) which can be screwed in is arranged in the at least one coolant duct (11, 12) of the pillow block cover (9).

11. The device as claimed in any one of the preceding claims, whereby at least one bore (23) through the pillow block cover (9) is provided for removing cooling medium which has penetrated into the gap between the pillow block cover (9) and pillow block (4), for example due to leakage of the sealing unit (7; 8; 19; 20; 21).

12. The device as claimed in any one of the preceding claims, whereby the pillow block cover (9) preferably has, in the region adjacent to the pillow block (4), an undercut region (19) for receiving cooling medium which has penetrated into the gap between the pillow block cover (9) and pillow block (4).

13. The device as claimed in claim 12, whereby the undercut region (19) has a U-shaped cross section for receiving cooling medium which has penetrated into the gap between the pillow block cover (9) and pillow block (4).

## Revendications

1. Dispositif d'accouplement d'une amenée de fluide de refroidissement à un cylindre (2), en particulier pour installations de coulée en continu, où le cylindre (2) est monté par l'intermédiaire de tourillons (3) dans un bloc de palier (4), au moyen de roulements (5), et peut être alimenté en fluide de refroidissement par l'intermédiaire d'un alésage axial ( 6) du cylindre, qui est aménagé à travers le tourillon (3), comprenant:
- un ensemble d'étanchéité (7; 8; 19; 20; 21) pouvant être immobilisé sur le tourillon (3) du cylindre de façon étanche à la pression, en vue d'être accouplé à l'alésage (6) du cylindre; et
- un couvercle de bloc de palier (9) qui peut être immobilisé sur le bloc de palier (4) de manière à recouvrir l'alésage (6) du cylindre et comporte au moins un canal de fluide de refroidissement (11, 12) pouvant être raccordé à l'amenée de fluide de refroidissement;
dans lequel un insert (14) portant, à l'état monté, l'ensemble d'étanchéité (7; 8; 19; 20; 21), peut être inséré dans le couvercle (9) du bloc de palier, et dans lequel l'insert (14) comporte au moins un canal de fluide de refroidissement (17, 18) permettant l'accouplement, étanche à la pression, du canal de fluide de refroidissement (11,12) à l'alésage (6) du cylindre par l'intermédiaire de l'ensemble d'étanchéité (7; 8; 19; 20; 21), canal qui, à l'état monté, se raccorde au canal de fluide de refroidissement (11, 12) du couvercle du bloc de palier (9) et à l'ensemble d'étanchéité (7; 8; 19; 20; 21); dans lequel l'ensemble d'étanchéité comprend une douille élastique (8) qui est fixée dans une bride (7) disposée dans le tourillon (3) du cylindre, et dans lequel l'ensemble d'étanchéité (7; 8; 19; 20; 21) comprend deux bagues lisses (19; 20) glissant l'une sur l'autre, formant des éléments de joint d'étanchéité, l'une des bagues lisses (19) étant supportée par l'insert (14), et l'autre bague lisse (20) étant supportée par la douille élastique (8).

2. Dispositif selon la revendication 1, dans lequel la douille élastique est un compensateur.

3. Dispositif selon la revendication 1 ou 2, dans lequel la douille (8) est fixée de manière démontable dans la bride (7).

4. Dispositif selon l'une quelconque des revendications 1 à 3, dans lequel l'insert (14) est configuré de manière telle qu'à l'état démonté, il découvre des moyens de fixation permettant la fixation démontable de la douille (8) et/ou de la bride (7) sur le tourillon (3) du cylindre.

5. Dispositif selon l'une quelconque des revendications 1 à 4, dans lequel l'insert (14) comporte un premier canal de fluide de refroidissement (17) et un deuxième canal de fluide de refroidissement (18) qui, à l'état monté, se raccordent sur un premier et un deuxième canal (11, 12) de fluide de refroidissement ménagés dans le couvercle (9) du bloc de palier.

6. Dispositif selon la revendication 5, dans lequel le premier canal de fluide de refroidissement (11) du couvercle (9) du bloc de palier peut être relié à une amenée de fluide de refroidissement, et le deuxième canal de fluide de refroidissement (12) du couvercle (9) du bloc de palier peut être relié à une évacuation de fluide de refroidissement.

7. Dispositif selon l'une quelconque des revendications 1 à 6, dans lequel un tube connecteur (24, 25) permettant de se raccorder à une surface d'assise (13) du bloc de palier connectée à l'évacuation de fluide de refroidissement et/ou à l'amenée de fluide de refroidissement peut être inséré dans ledit au moins un canal de fluide de refroidissement (11, 12) du couvercle (9) du bloc de palier d'une manière telle que le tube connecteur (24, 25) soit entièrement reçu à l'intérieur du couvercle (9) du bloc de palier.

8. Dispositif selon l'une quelconque des revendications 1 à 6, dans lequel le couvercle (9) du bloc de palier est fixé par l'intermédiaire d'une collerette de fixation (10) sur le bloc de palier (4).

9. Dispositif selon la revendication 8, dans lequel un connecteur à emboîtement (32, 33), destiné à recevoir un tube à emboîtement (34, 35) permettant le raccordement à une amenée de fluide de refroidissement et/ou une évacuation de fluide de refroidissement raccordées à une alimentation et/ou à une évacuation d'eau de refroidissement, peut être inséré dans ledit au moins un canal de refroidissement (11, 12).

10. Dispositif selon l'une quelconque des revendications précédentes, dans lequel au moins un bouchon fileté (28, 29; 40, 41) à visser est disposé dans ledit au moins un canal de fluide de refroidissement (11, 12) du couvercle (9) du bloc de palier.

11. Dispositif selon l'une quelconque des revendications précédentes, dans lequel au moins un trou (23) traversant le couvercle (9) du bloc de palier est prévu pour évacuer du fluide de refroidissement infiltré dans la zone comprise entre le couvercle (9) du bloc de palier et le bloc de palier (4), par exemple en raison d'une fuite de l'ensemble d'étanchéité (7; 8; 19; 20; 21).

12. Dispositif selon l'une quelconque des revendications précédentes, dans lequel le couvercle (9) du bloc de palier présente de préférence une zone en contre-dépouille (19) au niveau de la face placée en contact avec le bloc de palier (4), destinée à absorber du fluide de refroidissement infiltré dans la zone comprise entre le couvercle (9) du bloc de palier et le bloc de palier (4).

13. Dispositif selon la revendication 12, dans lequel la zone en contre-dépouille (19) présente une section transversale en forme de U permettant d'absorber du fluide de refroidissement infiltré dans la zone comprise entre le couvercle (9) du bloc de palier et le bloc de palier (4).
